# EUROPEAN PATENT SPECIFICATION

(11) **EP 2 169 883 B1**
(45) Date of publication and mention of the grant of the patent: **16.07.2014**
(21) Application number: 08290919.3
(22) Date of filing: 30.09.2008
(51) Int. Cl.: H04L 12/54

(54) **Asynchronous flow control and scheduling method**
Asynchrone Flusssteuerung und Planungsverfahren
Contrôle de flux asynchrone et procédé de planification

(43) Date of publication of application: 31.03.2010
(73) Proprietor: Alcatel Lucent, 92100 Boulogne-Billancourt (FR)
(72) Inventor: Noirie, Ludovic , c/o Alcatel Lucent, 75008 Paris (FR); Popa, Daniel c/o Alcatel Lucent, 75008 Paris (FR); Post, Georg , c/o Alcatel Lucent, 75008 Paris (FR); Dotaro, Emmanuel , c/o Alcatel Lucent, 75008 Paris (FR)
(74) Representative: Therias, Philippe

(56) References cited:
- US-A1- 2006 013 133
- KIRSTADTER A ED - MASON L (ED): "Fair and flexible contention resolution for input buffered ATM switches based on LAN medium access control protocols" BROADBAND COMMUNICATIONS. GLOBAL INFRASTRUCTURE FOR THE INFORMATION AGE. PROCEEDINGS OF THE INTERNATIONAL IFIP-IEEE CONFERENCE ON BROADBAND COMMUNICATIONS, CANADA, 1996, LONDON, CHAPMAN AND HALL, GB, 23 April 1996 (1996-04-23), pages 370-381, XP010525736 ISBN: 978-0-412-75970-3

## Description

### FIELD OF THE INVENTION

The present invention relates to packet flow scheduling through a switch node. Specifically, it relates to such scheduling mechanism used for packets delivery from one Virtual Output Queue (VOQ) to its corresponding output(s).

### BACKGROUND OF THE INVENTION

Switches and routers mainly contain N input line-cards, N output line-cards and a switching fabric. The switching fabric is a configurable interconnecting element that dynamically establishes links between input and output line-cards. Data transmission across input line-card competes to pass through the common switching fabric to reach the corresponding output line-card. Before the packet delivery though a switch node, the access to the switching fabric must be controlled by a scheduling task. The latter is necessary to find a proper one-to-one match between inputs and outputs in order to configure the switching fabric, no matter if the switching fabric is optical or electronic.

Switch nodes, operating under heavy traffic loads while supporting Quality of service (QoS), require smart scheduling scheme. A challenge is designing fast and clever algorithms to determine input-output matches that maximize switch node throughput, under the constraints of fairness and quality of service. The node must forward packets within bandwidth and delay limits, as required for real-time applications or high capacity transmissions such as distance learning, video conferencing, VoIP and remote communication.

In order to avoid the Head-of-Line blocking, scheduling techniques of packet flows are based on the use of Virtual Output Queue (VOQ). In fact, input line-cards store arriving packets in buffers before being sent to the outputs. Each buffer is partitioned into N Virtual Output Queues. A scheduler has to manage packet delivery from VOQs to the corresponding output or to several outputs in the case of multicast traffic.

The document US 2006/0013133 describes a packet-aware time division multiplexing switch with dynamically configurable switching fabric connections.

A document to KIRSTÄDTER A. et al. describes a fair flexible contention resolution for Input buffered ATM switches based on LAN Medium Access Control Protocols (KIRSTÄDTER A. et al, "Fair Flexible Contention Resolution for Input Buffered ATM Switches Based on LAN Medium Access Control Protocols", Proceeding of the international IFIP-IEEE Conference on Broadband Communications, 23-04-1996).

Existing scheduling algorithms for the VOQ architecture can be grouped in three classes according to their operating methods.

The first class of algorithms arbitrates between competing VOQs based on request weights when making the scheduling decisions. The weight could be the waiting time of the head-of-line cell in the VOQ, the number of cells in the VOQ, the queue length in the VOQ. One can mention the iterative and non-iterative Longest-Queue-First (LQF) algorithms, the iterative and non-iterative Oldest-Cell-First (OCF) algorithms (Mekkittikul A., Scheduling non-uniform traffic in high speed packet switches and routers, PhD thesis, Stanford University 1998), and the Longest-Port-First algorithm (McKeown N., Scheduling algorithms for input-queued cell switches, PhD thesis, UC Berkeley, California 1995).

The second class relates to algorithms that find the input-to-output match containing the maximum number of edges. The majority of these algorithms attempt iteratively to approximate a maximum size matching the inputs to the outputs. The most prominent algorithms belonging to this class are the Parallel Iterative Matching (PIM) (T. Anderson et al., High speed switch scheduling for local area networks, 1993), the Round-robin arbitration based scheduling techniques which can be subdivided into numerous approaches such as the iterative and non-iterative SLIP algorithms (McKeown N., Scheduling algorithms for input-queued cell switches, PhD thesis, UC Berkeley, California 1995), the FRIM algorithm (D. N. Serpanos et al., FIRM : A class of distributed scheduling algorithms for high-speed atm switches with multiple input queues, Infocom, March 2000), the DRRM algorithm (Li Y. et al, On the performance of a dual round-robin Switch, IEEE Infocom, 2001), the EDRRM algorithm (Li Y. et al, The dual round-robin matching switch with exhaustive service, Proceedings of the HPSR, Japan, 2002), the u-FORM algorithm (Rojas-Cessa R. et al, Captured-frame eligibility and round-robin matching for input-queue packet switches, IEEE commun Lett, 2004), the FDRRM algorithm (Dusan B. et al, Scheduling algorithm for VOQ switches, 2007), and the iterative and non-iterative DHL algorithms (Bidoki A. et al, A logarithm scheduling algorithm for high speed input-queued switches, 2008)

The third class concerns randomized scheduling. It makes use of different algorithms belonging to the first class to find candidates for scheduling. One can refer to the TASS algorithm (Tassiuals L., Linear complexity algorithms for maximum throughput in radio networks and input queued switches, Infocom, March 1998) and the APSRA, SERNA and the LAURA algorithms (Giaccone P. et al, Towards simple, high-performance schedulers for high-aggregate bandwidth switches, Infocom, June 2002).

Scheduling approaches cited above are generally used for both unicast and multicast traffic, either simultaneously or separately and in distributed or centralized manner. One can mention the Multicast and Unicast Round robin scheduling (MURS) algorithm (Mhamdi L. et al, Integrating uni- and multicast scheduling in Buffered crossbar switches, Workshop on high performances switching and routing, June 2006).

Among all these techniques, those belonging to the first class perform well in terms of both delay and stability. However, these algorithms may feature a high computational complexity which makes their implementation difficult. The second class algorithms perform well under uniform traffic, but are not stable under non-uniform traffic. The third class algorithms are linear in complexity and provide the benefit of being stable under any admissible traffic. But, this enhancement comes with an increase of the average delay. There is no scalable and efficient algorithm that shows good performance under both high/low and varying/uniform traffic load.

Generally, scheduling techniques operate on partial or total knowledge of the state of the input /output line-cards. This means that control information must be exchanged among line-cards, through the switching fabric and that significant processing power must be devoted to scheduling algorithm either in a centralized arbiter device or on line-cards in a distributed manner.

The input-to-output matching is usually done through the request-grant-accept phases. The decision time spent by the grant and the accept arbiters takes the bulk of the whole iteration time. This is related to the high quantity of data exchanged between the inputs and outputs. Hence, the problem faced by scheduling algorithms with VOQ consists in finding a method requiring little information exchange between inputs and outputs and efficiently using the switching fabric throughput, while respecting the packet QoS (delay, delay jitter, bandwidth, capacity).

In order to avoid that the destination buffer overflows or underflows, the input VOQ sends requests to the corresponding output scheduler or to the node scheduler to ask bandwidth for its traffic flow; then it waits for the acknowledgment or grant. To prepare these grants, arbitration algorithms have to find the best bandwidth matching between input and outputs. This preprocessing, preceding the functional data transmission, exploits the switching fabric more or less efficiently and limits the switch node throughput.

Two current solutions of the efficiency problem can be distinguished. They will be designated by #A and #B. The input-side VOQs ask bandwidth in the following ways:
- solution #A: for each new packet arrival
- solution #B: on a cyclic basis with a short cycle time, according to either the new packet arrivals during the cycle or to the VOQ filling.

Solution #A requires too many information exchange and frequent arbitration processing. Specifically, it is not scalable for high capacity nodes. Hence, it tends to process incomplete or delayed information and uses inefficiently the switching fabric's available throughput.

The solution #B uses a windowing technique. The scheduler looks ahead n packets instead of one packet. Showing better performance than solution #A, solution #B solves partly the scalability issue by grouping many packets per cycle. However, one of its drawbacks resides in the fact that the increased cycle duration leads to high latency and delays in the node.

As a result, bandwidths requests for each new packet arrival or cyclically are not efficient enough for high traffic volumes. An optimal request mechanism is crucial to use efficiently the switching fabric throughput.

Having identified the problem, accurate requested bandwidths and correct request signalling frequency are the main parameters of information exchange for the scheduling task.

### OBJECTS OF THE INVENTION

A first object of the present invention is a method enabling optimization of traffic flow through a switch node from a buffer to its corresponding outputs.

A second object of the present invention is a method enabling optimization of the frequency of VOQ request in order to reach the switching fabric throughput.

A third object of the present invention is a method enabling the sending of VOQ requests only when a significant flow event occurs.

A fourth object of the present invention is a method enabling requesting bandwidth as a function of the characteristics traffic flow at the VOQ entry and VOQ filling ratio.

Another object of the present invention is a parametric scheduling scheme, this scheme being function of internal parameter (incoming traffic flow of the VOQ, buffer filling ratio) and external constants (thresholds).

In accordance with another aspect of the present invention, a simple and efficient scheduling mechanism that can be easily implemented in high bandwidth routers is proposed.

In accordance with another aspect of the present invention, a robust method for packet delivery from one VOQ to its corresponding outputs under medium/high and uniform/fast varying traffic is proposed.

### SUMMARY OF THE INVENTION

The invention relates to a scheduling method for data delivery through a switch node, said switch node comprising a switching device and an input module that conveys data units then stores them into input temporal memories before being sent to an output module, said output module receiving the forwarded data units in output temporal memories, said input temporal memories being partitioned into a plurality of input virtual output queue, said output temporal memories being partitioned into a plurality of output queue, said input and output modules using a centralized or a distributed scheduling algorithm, said scheduling method for data delivery comprising:
- identifying the filling ratio of input virtual output queue ;
- comparing said filling ratio of said input virtual output queue to predefined thresholds;
- measuring the characteristics of the incoming traffic flow at the entry of said input virtual output queue;
- sending a bandwidth request to a scheduler only if at least one threshold is reached, the requested bandwidth is function of said measured characteristics of the incoming traffic flow at the entry of the said input virtual output queue ;
- disabling said thresholds if the requested bandwidth is greater than the value granted by the scheduler.
Advantageously, a plurality of minimum filling ratio thresholds is defined for the said input VOQ.
Advantageously, a plurality of maximum filling ratio thresholds is defined for the said input VOQ.
Advantageously, characteristics of the incoming traffic flow rate at the entry of the said input VOQ are measured. Requested bandwidth is a function of the current filling ratio and the measured characteristics of the incoming traffic flow at the entry of the current said input VOQ. The requests addressed by said input VOQ to said scheduler depends on said predefined filling ratio thresholds, current filling ratio of said input VOQ, and the characteristics of the incoming traffic flow at the entry of the current input VOQ.

The invention relates to a switch node implementing a scheduling method for data delivery according to the above method.

### DESCRIPTION OF THE DRAWING

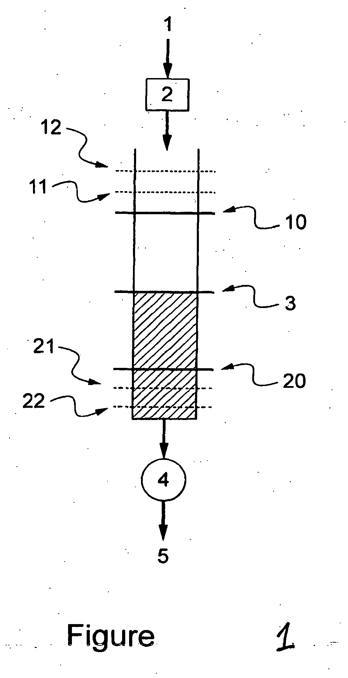

The features and advantages of the invention will become more apparent from the following detailed description with reference to the attached Figure 1, showing a schematic diagram of the traffic flows through an input VOQ.

### DETAILED DESCRIPTION OF THE PREFERRED EMBODIMENT

The incoming traffic 1 flow rate is measured by measurement means 2 at the entry of the VOQ.

A maximum filling ratio threshold 10 is formulated by C x Dmax, where Dmax is set to be a predefined system constant linked to the maximum threshold and C is the previously requested bandwidth by the VOQ.

Dmax represents the delay of the last packets in the VOQ when the maximum threshold is reached.

A minimum filling ratio threshold 20 can be formulated by C x Dmin, where Dmin is set to be a predefined system constant linked to the minimum threshold. Dmin represents the remaining delay of the last packets in the VOQ when the minimum threshold is reached. Preferably, Dmin is chosen close to zero and even null. A non null value of Dmin may be advantageous in order to take into account an effective bandwidth reduction when the buffer is almost empty.

Knowing the buffer filling ratio 3, the requested bandwidth 4 is set inferior, equal or superior to C. If the buffer filling ratio 3 is superior to the maximum threshold 10, then, in order to avoid VOQ overflow, the requested bandwidth 4 is higher than the measured traffic flow rate 1. Otherwise, if the buffer filling ratio 3 is inferior to the minimum threshold 20, the requested bandwidth 4 is lower than the measured traffic flow rate 1 at the entry of the VOQ.

As a non-limitative example, a characteristic of the incoming traffic flow 1 at the entry of the input VOQ may be its exponential average.

Measurement of the traffic flow rate 1 can be obtained, for example, by exponential averaging mechanisms with a particular attention to the averaging period T. T may depend on the QoS of the flow and/or the expected behavior of the traffic flow.

The following flowchart shows an exponential average measurement with a weight factor ε and averaging period T.

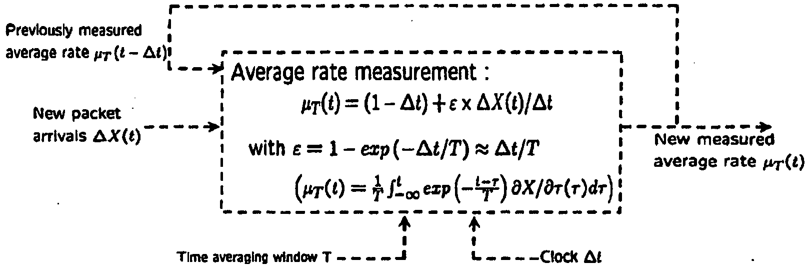

T should not be too long to correctly follow traffic variations. T should not be too short so that insignificant traffic variations are filtered out. With an adequate choice of T, the hardware implementation of exponential average can be reduced to bit shifting and adding.

In order to efficiently utilize the total switching fabric bandwidth, to reduce the latency, and to provide the packets forwarding smoothly, the bandwidth request depends on the VOQ filling ratio 3.

The requested bandwidth 4 is a bounded linear piecewise function of the traffic flow rate 1 measured by means 2. Intervals are delimited by predefined minimum/maximum thresholds 10 and 20.

One or more minimum thresholds can be defined (see references 20, 21 and 22 on figure 1). When the VOQ filling ratio 3 is below a given minimum threshold, the VOQ sends a request for less bandwidth, according to the current measured traffic flow rate at the entry of the VOQ. The requested bandwidth may be a fraction of the previously requested bandwidth C. Different fraction coefficients may be linked to minimum thresholds.

In order to avoid a continuous bandwidth reduction, one can fix a minimum bandwidth Cmin below which the condition is not tested anymore. Cmin represents the minimal bandwidth that can be allocated for this flow, even if there is no traffic flow. It is also possible to implement some timer to test if, despite the decrease of the requested bandwidth, the filling ratio of the said input VOQ remains inferior to a minimum filling ratio threshold until the time is out.

One or more maximum thresholds can be defined (see references 10, 11 and 12 on figure 1). When the VOQ filling is above a given maximum threshold, the VOQ sends a request for more bandwidth, according to the current measured traffic flow rate 1. The requested bandwidth 4 is, in this case, superior to what is already requested. A set of amplification coefficients may be defined in accordance to maximum thresholds. Particular choice of these coefficients may simplify the implementation. As a non-limitative example, these coefficients may be chosen in the form of 1/2n.

Maximum thresholds are linked to the QoS of the flow, more precisely to the target maximum delay of the flow.

In order to avoid a continuous bandwidth increase, one can fix a maximum bandwidth Cmax above which the condition is no tested anymore. Cmax represents the maximal bandwidth that can be allocated for this flow, even if there is a VOQ overflow. It is also possible to implement some timer to test if, despite the increase of the requested bandwidth, the filling ratio of the said input VOQ remains higher than a maximum filling ratio threshold until the time is out.

Following a simple comparison between the VOQ filling ratio 3 and the minimum/maximum thresholds, the requested bandwidth 4 is a fraction of, equal to, or an amplification of the previously requested bandwidth.

When there is no congestion, the requested bandwidth 4 is automatically granted by the scheduler 5.

In the case of congestion, particularly if the requested bandwidth 4 is greater than the value granted by the scheduler 5, the threshold mechanisms may be disabled. They will be enabled again when the congestion disappears.

At medium/high load for not too fast varying traffic, the buffer filling ratio 3 will mainly oscillate between minimum and maximum thresholds. Thus, in such traffic conditions, the proposed scheduling mechanism generates very few bandwidth requests. The request occurs only when the minimum or maximum thresholds are reached.

Definition of minimum/maximum thresholds enhances scheduling performance under any medium/high uniform traffic load.

Under very fast varying traffic, in order to reduce the number of bandwidth request generated by this mechanism and so as to follow the fast variations of the traffic, an additional temporal constraint can be added. As an example, a timer mechanism can be incorporated to keep scheduling signaling frequency low.

## Claims

1. A scheduling method for data delivery through a switch node, said switch node comprising a switching device and an input module that conveys data units then stores them into input temporal memories before being sent to an output module, said output module receiving the forwarded data units in output temporal memories, said input temporal memories being partitioned into a plurality of input virtual output queues, VOQ, said output temporal memories being partitioned into a plurality of output queues, said input and output modules using a centralized or a distributed scheduling algorithm, said scheduling method for data delivery comprising:
- identifying the filling ratio (3) of an input virtual output queue (2);
- comparing said filling ratio (3) of said input virtual output queue (2) to predefined thresholds (10,11,12; 20,21,22);
- measuring the characteristics of the incoming traffic flow (1) at the entry of said input virtual output queue (2);
- sending a bandwidth request to a scheduler (5) only if at least one threshold (10,11,12; 20, 21, 22) is reached, the requested bandwidth is function of said measured characteristics of the incoming traffic flow (1) at the entry of the said input virtual output queue (2);
**characterized in that** the method further comprises
- disabling said predefined thresholds (10,11,12; 20,21,22) if the requested bandwidth is greater than the value granted by the scheduler (5).

2. Method for data delivery in accordance with claim 1, **characterized in that** a plurality of minimum filling ratio thresholds (20, 21, 22) are defined for the said input VOQ (2).

3. Method for data delivery in accordance with claim 1, **characterized in that** a plurality of maximum filling ratio thresholds (10, 11, 12) are defined for the said input VOQ (2).

4. Method for data delivery in accordance with any of claim 1 to 3, **characterized in that** characteristics of the incoming traffic flow rate (1) at the entry of the said input VOQ (2) are measured.

5. Method for data delivery in accordance to any of claims 1 to 4, **characterized in that** requested bandwidth (4) is a function of the current filling ratio and the measured characteristics of the incoming traffic flow (1) at the entry of the current said input VOQ (2).

6. Method for data delivery in accordance with any of claims 1 to 5, **characterized in that** the requests (4) addressed by said input VOQ (2) to said scheduler (5) depends on said predefined filling ratio thresholds (10, 11, 12; 20, 21, 22), current filling ratio (3) of said input VOQ (2), and the measured characteristics of the incoming traffic flow at the entry of the current input VOQ (2).

7. A switch node implementing a scheduling method for data delivery according to any of claims 1 to 6.

## Patentansprüche

1. Scheduling-Verfahren für die Zustellung von Daten über einen Vermittlungsknoten, wobei der besagte Vermittlungsknoten eine Schalteinrichtung und ein Ausgabemodul, welches Dateneinheiten befördert, diese anschließend in vorübergehenden Eingangsspeichern speichert, bevor sie an ein Ausgabemodul gesendet werden, umfasst, wobei das besagte Ausgabemodul die weitergeleiteten Dateneinheiten in vorübergehenden Ausgangsspeichern empfängt, wobei die besagten vorübergehenden Eingangsspeicher in eine Vielzahl von eingegebenen virtuellen Ausgangsvwarteschlangen (VOQ) untergliedert ist, wobei die besagten vorübergehenden Ausgangsspeicher in eine Vielzahl von Ausgangswarteschlangen untergliedert sind, wobei die besagten Eingabe- und Ausgabemodule einen zentralisierten oder einen verteilern Planungsalgorithmus verwenden, wobei das besagte Scheduling-Verfahren für die Zustellung von Daten umfasst:
- Identifizieren des Füllungsgrads (3) einer eingegebenen virtuellen Ausgangswarteschlange (2);
- Vergleichen des besagten Füllungsgrads (3) der besagten eingegebenen virtuellen Ausgangswarteschlange (2) mit vordefinierten Grenzwerten (10, 11, 12; 20, 21, 22);
- Messen der Eigenschaften des eingehenden Verkehrsflusses (1) am Eingang der besagten eingegebenen virtuellen Ausgangswarteschlange (2);
- Senden einer Bandbreitenanforderung an einen Scheduler (5) nur dann, wenn mindestens ein Grenzwert (10, 11, 12; 20, 21, 22) erreicht wird, wobei die angeforderte Bandbreite von den besagten gemessenen Eigenschaften des am Eingang der besagten eingegebenen virtuellen Ausgangswarteschlange (2) eingehenden Verkehrsflusses (1) abhängt;
**dadurch gekennzeichnet, dass** das Verfahren weiterhin umfasst:
- Sperren der besagten vordefinierten Grenzwerte (10, 11, 12; 20, 21, 22), wenn die angeforderte Bandbreite den von dem Scheduler (5) erteilten Wert überschreitet.

2. Verfahren für die Zustellung von Daten nach Anspruch 1 **dadurch gekennzeichnet, dass** eine Vielzahl von Füllungsgrad-Mindestgrenzwerten (20, 21, 22) für die besagte eingegebene VOQ (2) definiert wird.

3. Verfahren für die Zustellung von Daten nach Anspruch 1, **dadurch gekennzeichnet, dass** eine Vielzahl von Füllungsgrad-Höchstgrenzwerten (10, 11, 12) für die besagte eingegebene VOQ (2) definiert wird.

4. Verfahren für die Zustellung von Daten nach einem beliebigen der Ansprüche 1 bis 3, **dadurch gekennzeichnet, dass** die Eigenschaften der am Eingang der besagten eingegebenen VOQ (2) eingehenden Verkehrsflussrate (1) gemessen werden.

5. Verfahren für die Zustellung von Daten nach einem beliebigen der Ansprüche 1 bis 4, **dadurch gekennzeichnet, dass** die angeforderte Bandbreite (4) von dem aktuellen Füllungsgrad und von den gemessenen Eigenschaften des am Eingang der besagten aktuellen eingegebenen VOQ (2) eingehenden Verkehrsflusses (1) abhängt.

6. Verfahren für die Zustellung von Daten nach einem beliebigen der Ansprüche 1 bis 5, **dadurch gekennzeichnet, dass** die von der besagten eingegebenen virtuellen Ausgangswarteschlange (2) an den besagten Scheduler (5) adressierten Anforderungen (4) von den besagten vordefinierten Füllungsgrad-Grenzwerten (10, 11, 12; 20, 21, 22), von dem aktuellen Füllungsgrad (3) der besagten eingegebenen virtuellen Ausgangswarteschlange (2) und von den gemessenen Eigenschaften des am Eingang der aktuellen eingegebenen VOQ (2) eingehenden Verkehrsflusses abhängen.

7. Vermittlungsknoten, welcher ein Scheduling-Verfahren für die Zustellung von Daten gemäß einem der Ansprüche 1 bis 6 implementiert.

## Revendications

1. Procédé d'ordonnancement pour la distribution de données par le biais d'un noeud de commutation, ledit noeud de commutation comprenant un dispositif de commutation et un module d'entrée qui transporte des unités de données puis les stocke dans des mémoires temporaires d'entrée avant qu'elles soient envoyées à un module de sortie, ledit module de sortie recevant les unités de données transférées dans des mémoires temporaires de sortie, lesdites mémoires temporaires d'entrée étant partitionnées en une pluralité de files d'attente de sortie virtuelles d'entrée (VOQ), lesdites mémoires temporaires de sortie étant partitionnées en une pluralité de files d'attente de sortie, lesdits modules d'entrée et de sortie utilisant un algorithme d'ordonnancement centralisé ou distribué, ledit procédé d'ordonnancement pour la distribution de données comprenant les étapes suivantes :
- identification du taux de remplissage (3) d'une file d'attente de sortie virtuelle d'entrée (2) ;
- comparaison dudit taux de remplissage (3) de ladite file d'attente de sortie virtuelle d'entrée (2) avec des seuils prédéfinis (10, 11, 12 ; 20, 21, 22) ;
- mesure des caractéristiques du débit de trafic entrant (1) à l'entrée de ladite file d'attente de sortie virtuelle d'entrée (2) ;
- envoi d'une demande de largeur de bande à un ordonnanceur (5) uniquement su au moins un seuil (10, 11, 12 ; 20, 21, 22) est atteint, la largeur de bande demandée étant en fonction desdites caractéristiques mesurées du débit de trafic entrant (1) à l'entrée de ladite file d'attente de sortie virtuelle d'entrée (2) ; **caractérisé en ce que** le procédé comprend en outre
- désactivation desdits seuils prédéfinis (10, 11, 12 ; 20, 21, 22) si la largeur de bande demandée est supérieure à la valeur accordée par l'ordonnanceur (5).

2. Procédé de distribution de données selon la revendication 1, **caractérisé en ce qu'**une pluralité de seuils (20, 21, 22) de taux de remplissage minimal sont définis pour ladite VOQ (2).

3. Procédé de distribution de données selon la revendication 1, **caractérisé en ce qu'**une pluralité de seuils (10, 11, 12) de taux de remplissage maximal sont définis pour ladite VOQ d'entrée (2).

4. Procédé de distribution de données selon l'une quelconque des revendications 1 à 3, **caractérisé en ce que** les caractéristiques du débit de trafic entrant (1) à l'entrée de ladite VOQ d'entrée (2) sont mesurées.

5. Procédé de distribution de données selon l'une quelconque des revendications 1 à 4, **caractérisé en ce que** la largeur de bande demandée (4) est une fonction du taux de remplissage actuel et des caractéristiques mesurées du débit de trafic entrant (1) à l'entrée de ladite VOQ d'entrée (2) courante.

6. Procédé de distribution de données selon l'une quelconque des revendications 1 à 5, **caractérisé en ce que** les demandes (4) adressées par ladite VOQ d'entrée (2) audit ordonnanceur (5) dépendent desdits seuils prédéfinis (10, 11, 12; 20, 21, 22) de taux de remplissage, du taux de remplissage (3) actuel de ladite VOQ d'entrée (2) et des caractéristiques mesurées du débit de trafic entrant (1) à l'entrée de la VOQ d'entrée (2) courante.

7. Noeud de commutation mettant en oeuvre un procédé d'ordonnancement pour la distribution de données selon l'une quelconque des revendications 1 à 6.
